# EUROPEAN PATENT APPLICATION

(11) **EP 2 618 035 A1**
(43) Date of publication of application: **24.07.2013**
(21) Application number: 12462001.4
(22) Date of filing: 18.01.2012
(51) Int. Cl.: F16L 9/16, F16L 11/14, F24F 13/02

(54) **Duct element for pipelines used in air conditioning system and fitting pieces for connecting said duct elements**

(71) Applicant: Origo Plan Kft., 1126 Budapest (HU); Vas, György, 1031 Budapest (HU)
(72) Inventor: Lörincz, Péter, 1126 Budapest (HU)
(74) Representative: Kovacs, Ivanné

(57) **Abstract**

The invention relates to a duct element (4) for air handling pipeline comprising several strips wound in individual layers, where the layers are wound with an overlapping area (Z) and of a given pitch (X), and the duct element is developed preferably for application as a pipeline in air handling systems.
The essence of the invention lies in that the duct element (4) comprises at least three layers (1,2,3) from which the lowermost layer (1) and the uppermost covering layer (3) consist of closed-cell, hard, fire-retardant insulating polyolefin material having a density of at least of 90 kg/m³, whereas the layer (2) in the middle consists of a closed cell, soft, fire-retardant polyolefin material having a density of about 30-40 kg/m³, and the individual layers (1,2,3) are preferably laminated by using hot air.

## Description

The invention relates to an improved duct element for pipelines used in air conditioning or handling systems. The duct elements built in these systems are made preferably from a heat-insulating material of cross sections in circular, rectangular or basket curve form. The invention relates further to fitting pieces for connecting said duct elements coupled to these pipelines as coupling and/or junction elements.

Air handling pipelines used in ventilating and other air conditioning systems are usually made of metal plates, typically of aluminium or some galvanized plate.

The joints and junction elements of the air handling pipelines and fitting pieces are made also of metal.

For transporting different liquids or gases, plastic pipelines of circular cross section are used, such as described e.g. in patents CA 2 380 885. The flexible pipeline described in the description comprising a core of insulating material, such as polyurethane, polyethylene or similar material, a wire-like reinforcing element and a casing made of at least one strip covering the core and reinforcing material. The core may be a glass fibre, other fibrous material, whereas the coating may be a polymeric material. However, such pipes are usually not applied in air handling systems. US 3 916 953 describe a pipe consisting of an inner tube an outer tube and a flexible heat insulating belt or strip helically wounded between the inner and outer tubes.

Drawback of both solutions lies in that the procedure of manufacturing these pipelines is quite complex, time- and energy-consuming. After their mounting, such systems should be provided with heat insulators depending on whether cold or hot air is transported in them. In case of insulation against cold, the insulation should be moisture-free in order to prevent vapour condensation.

Insulation after mounting is usually simple in case of straight pipes, but in case of fitting piece forms, so-called cut out patterns should be prepared for each type and size of the fitting pieces, in order to make the insulation technically and aesthetically satisfactory.

However, we recognized that if the plastic tubes are made of appropriate materials and of layers of these materials, they will be suitable for application as air handling pipelines.

The aim of the invention is to prepare duct elements for air handling pipelines of appropriate cross sections, preferably of circular, rectangular or basket curve cross sections, eliminating the above disadvantages. The duct element made according to the invention can be manufactured and assembled easily, they are place sparing, material sparing, and in case of their demolition, they can be recycled in 100%.

The recognition of the invention is that a pipeline prepared by overlapping winding from several layers of well-chosen materials can be made appropriately rigid for pipelines in air handling systems and can be produced in arbitrary length and cross section. The different layers consist of foam strips of different density, thickness and material structure.

The invention relates to a duct element for air handling pipeline comprising several strips wound in individual layers, where the layers are wound with an overlapping area Z and of a given pitch X, and the duct element is developed preferably for application as a pipeline in air handling systems.

The essence of the invention lies in that, the duct element comprises at least three layers from which the lowermost layer and the uppermost covering layer consist of closed-cell, hard, fire-retardant insulating polyolefin material having a density of at least of 90 kg/m³, whereas the layer in the middle consists of a closed cell, soft, fire-retardant polyolefin material having a density of about 30-40 kg/m³, and the individual layers are preferably laminated by using hot air.

Preferably the lowermost layer is an acoustic insulating multilayer construction containing first a layer of open-cell polyurethane material, a second layer of heavy plate e.g. of lead or rubber, and a third layer of closed-cell, hard, fire-retarding polyolefin material having a density of at least 90 kg/m³.

Both ends of the strips are optionally cut down in 45°.

The uppermost covering layer optionally is provided with a textile, paint or aluminium foil for retarding fire.

The duct element can haves a circular, rectangular or basket curve cross section, and the innermost layer being in contact with the flowing medium is treated with a bactericide and antistatic material.

The invention relates further to fitting pieces needed for fitting the duct elements of pipeline, which fitting pieces are also made of the duct elements.

In order that the duct element made according to the invention may be more readily understood some preferred embodiments will now be described, by way of example only, with reference to the accompanying drawings, in which
Figures 1a, 1b and 1c show the perspective, front and side view, respectively, of the first exemplary embodiment of the duct element of the invention;
Figure 1d shows part A of Figure 1c;
Figures 2a, 2b and 2c illustrate the perspective, front and side view, respectively, of the second exemplary embodiment of the duct element of the invention;
Figure 2d is part A of Figure 2c,
Figures 3a-3f show some of coupling and joining fitting pieces which can be used to the duct elements of circular cross section;
Figures 4a, 4b and 4c show the perspective, front and side view, respectively, of the third exemplary embodiment of the duct element of the invention;
Figure 4d shows part A of Figure 4c;
Figures 5a-5g show some cross sections and fitting pieces, which can be used to the third exemplary embodiment of the invention.

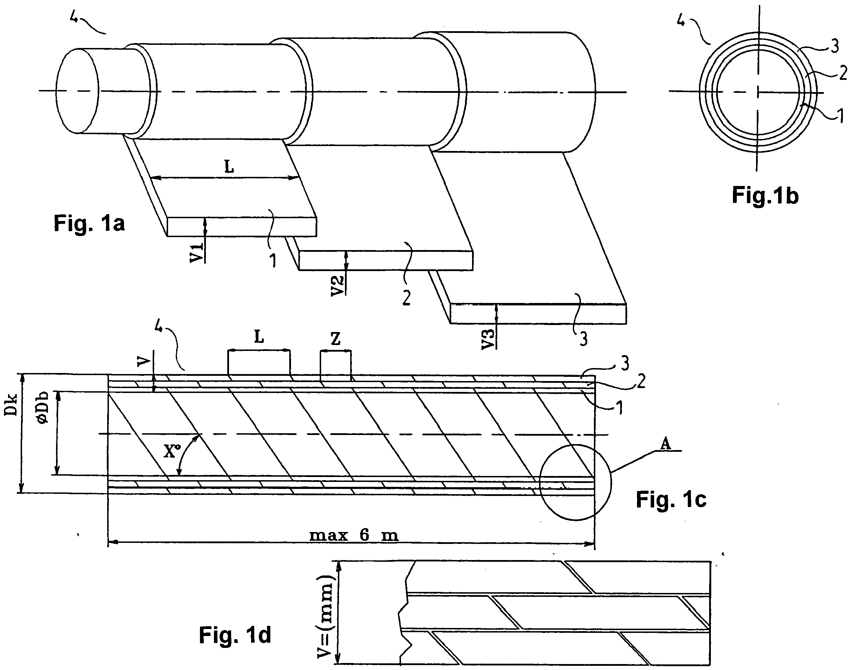

Figures 1a-1d show the first exemplary embodiment of the duct element 4 prepared according to the invention.

The air handling duct element 4 or pipeline corresponding to the requirements is developed in the first exemplary embodiment as a layered product, which comprises three layers 1, 2 and 3 which are wound individually with an internal diameter of Db, as strips of a width of L. The strips forming layers 1, 2 and 3 are each wound with an overlapping of Z and a pitch of X. The thickness of layer 1 is V1, that of layer 2 is V2 and that of layer 3 is V3. Thicknesses V1, V2 and V3 may be identical or different, as well. Both ends of strips forming layers 1, 2 and 3 are cut down in an angle of 45°. The resulting duct element 4 has an external diameter of Dk. In this exemplary embodiment, layer 1 is a strip cut off from a hard, fire-retardant, closed-cell polyolefin plate, layer 2 is a strip cut from a soft, fire-retardant, closed-cell polyolefin plate, and layer 3 is identical with layer 1. The surface of the internal layer 1 being in contact with the flowing medium can be treated with some bactericide and antistatic material for decreasing the danger of spreading some infection through the system.

The adhesion of the individual layers 1, 2, 3 to each other is stabilized and performed by streaming hot air, the temperature of which is in conformity with materials used, and ensuring the fusion and adhesion of the surfaces. The expert in the art can always optimize the temperature used. This usually means that the temperature of the surfaces being in contact should be higher than 135°C.

The cut down of layers 1, 2 and 3 in 45° is necessary from several points of views:
Corresponding to pitch X, the overlapping area Z of layers 1, 2 and 3 following after each other and consisting of strips made of foam is always bigger than it would be if they contacted only along the thickness of the strips.

Due to overlapping area Z, the internal wall of the air handling duct element 4 is smooth, thus the flow resistance and the noise produced by the flowing medium is smaller.

Overlapping area Z ensures the air-tightness of air handling duct element 4, and the adhesion and condensation of impurities is also smaller on the smooth surface, thus the air handling duct element 4 and as such the whole pipeline can be cleaned in an easy way.

Winding starts always with layer 1 made of hard, closed-cell, fire-retardant polyolefin strip having a density of 90 kg/m³, a thickness of V1, a width of L1, with a pitch of Y under an angle of α.

The next layer 2 consists of a soft, closed-cell, fire-retardant polyolefin strip having a density of 30 kg/m³. a thickness of V2, a width of L2 , he same pitch Y and angle α and an overlapping area Z as the first layer 1. The thickness of the second layer 2 has to be determined by a professional air technician, taking into consideration the requirements regarding the heat- and vapour handling viewpoints required.

The strip forming the closing and cover layer 3 is made of, hard, closed-cell, fire-retardant polyolefin strip of having a density of 90 kg/m³, a thickness of V3, an overlapping area Z, pitch of Y and angle of α.

The rigidity of the pipeline 4 is ensured by the strips forming the hard, lower or innermost layer 1 and outer cover layer 3 wound with an overlapping area Z.

This multilayer duct element 4 according to the invention can be prepared in different layer arrangements, different material quality, material structure with the restriction that the closing outer cover layer 3 should always be made of a hard material having a density at least of 90 kg/m³. The outer surface of this layer 3 may be coated by some textile, painting or aluminium foil having fire-retarding property. This exemplary embodiment can be used for example as a heat insulating pipeline.

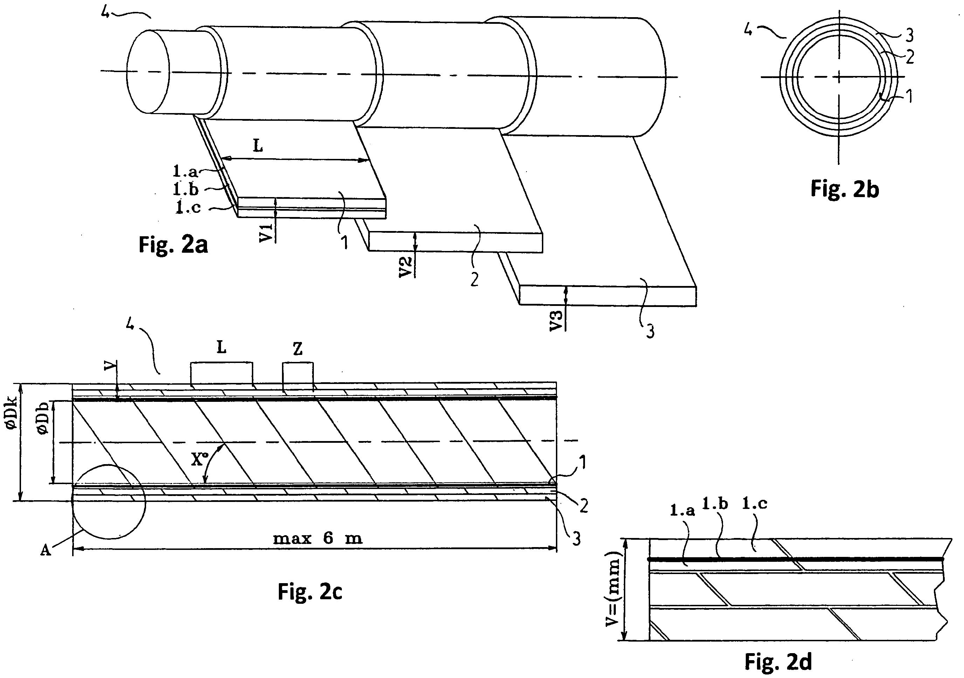

The second exemplary embodiment of duct element 4 according to the invention is shown in Figures 2a-2d. This embodiment of the duct element 4 can be used preferably as an acoustic insulator pipeline, in a length determined by a professional in acoustic technology.

This embodiment differs from the previous one in the acoustic insulator innermost layer 1 consisting of three layers 1 a, 1b and 1 c. Layer 1 a is a strip made of an open-cell polyurethane strip, layer 1b is made of a heavy plate, e.g. of a specific kind of rubber or of lead, whereas the outer layer 1 c is a strip made of closed-cell, hard, fire-retardant polyolefin strip.

Layer 2 is made of a closed-cell, soft, fire-retardant polyolefin strip, and layer 3 is made of a closed-cell, hard, fire-retardant polyolefin strip.

At winding, the adhesion and fusion of the individual layers 1, 2 and 3 is achieved by treating them with streaming hot air of the appropriate temperature, as mentioned above.

The duct element 4 used as acoustic insulator pipeline developed by winding the strips having a width of L and forming layers 1, 2 and 3 with an internal diameter of Db. Layer 1 consisting of layers 1 a, 1b and 1 c, as well as the strips forming layers 2 and 3 are wound individually with an overlapping area Z and pitch X. The thickness of layer 1 is V1, that of layer 2 is V2 and that of layer 3 is V3. Both ends of strips forming layers 1, 2 and 3 are cut down in an angle of 45°. The external diameter of the resulting duct element 4 is Dk. Thus, duct elements 4 forming a pipeline are multilayered duct elements 4 where the layers have different material structures and thicknesses.

From the air handling duct elements 4 air handling fitting pieces can be formed for connecting and coupling the duct elements 4 for forming a pipeline system. In this case, preparing a cut-out formwork used in the known technologies can be eliminated, thus the work is significantly simpler.

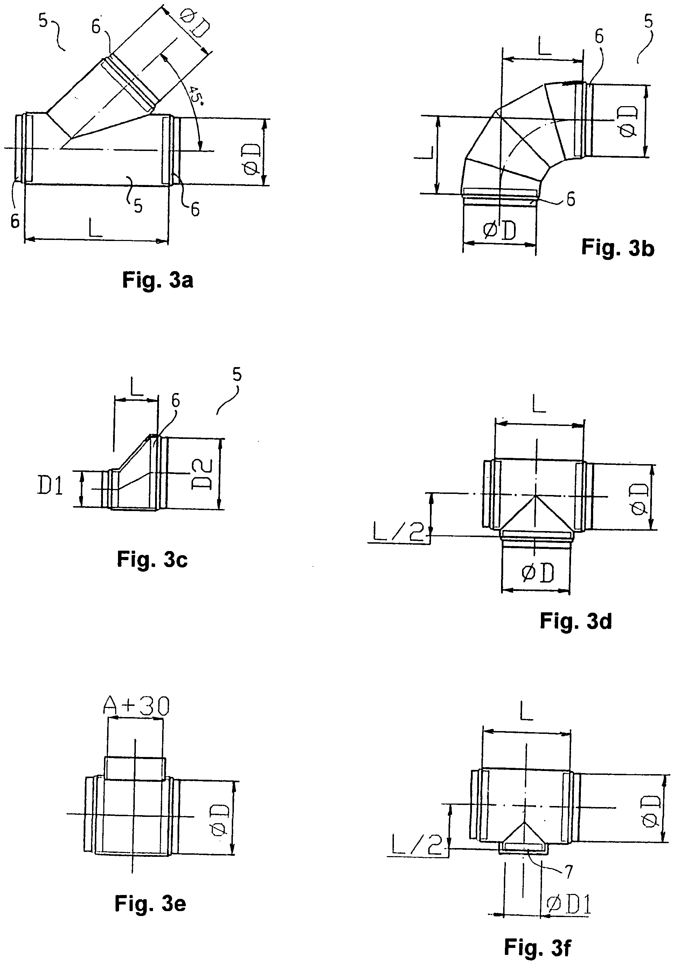

In Figures 3a-3f, fitting pieces 5 and corresponding connecting cuffs 6 most often used are shown for the duct elements 4 of circular cross section.

In Figure 3a, a T-fitting piece joined in 45°, in Figure 3b a bow piece of an inclination angle of 90°, in Figure 3c an eccentric reducing fitting piece, in Figure 3d a simple T-fitting piece and in Figure 3e a fitting piece for air grid are shown. Figure 3f illustrates a cleaning fitting piece provided with an closing plug 7 . The fitting piece in Fig. 3f is a double-branched Y-fitting piece. Fitting pieces 5 to duct element 4 are easy to prepare by means of simple templates.

The common feature in fitting pieces 5 is that the joining cuff 6 is made always of metal, the role of which is to ensure the appropriate cross section and making the contact with duct element 4. In case fitting piece of a circular cross section can ensure the connection of the commercial circular metal piece to the air handling pipeline.

The air handling duct element 4 and fitting piece 5 according to the invention, as well as the system made of them is light, easy to mount, and easy holding or hanging structures may be applied to them. Cutting of air handling duct elements 4 can be performed by a sharp knife with the formation of very small amount of waste.

The material of the air handling duct elements 4 and fitting pieces 5 can be fully recycled.

The composition of the raw material can be completed if necessary by adding some further additives corresponding to the requirements, thus the propagation of bacteria and moulds can be prevented.

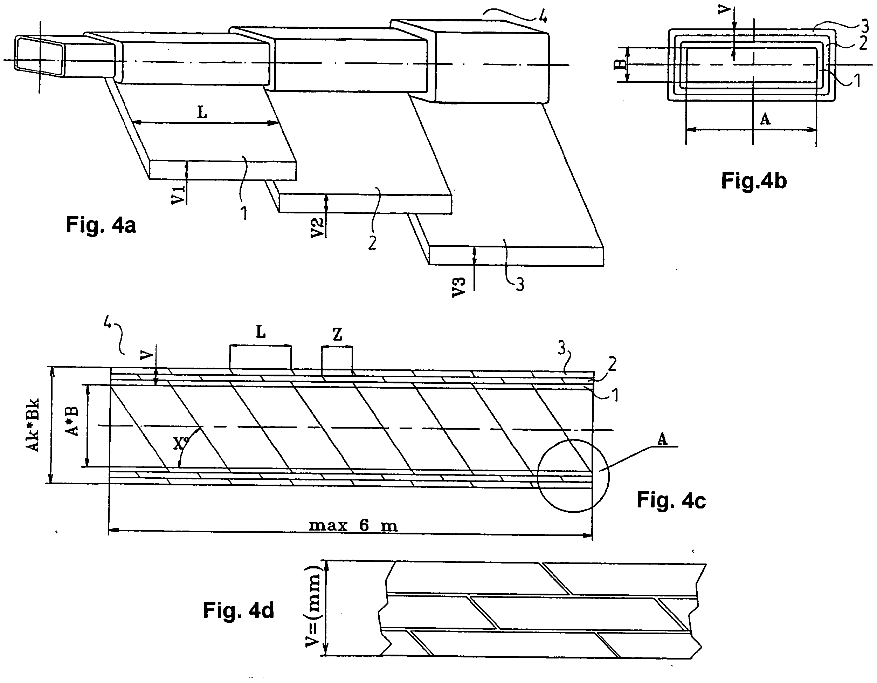

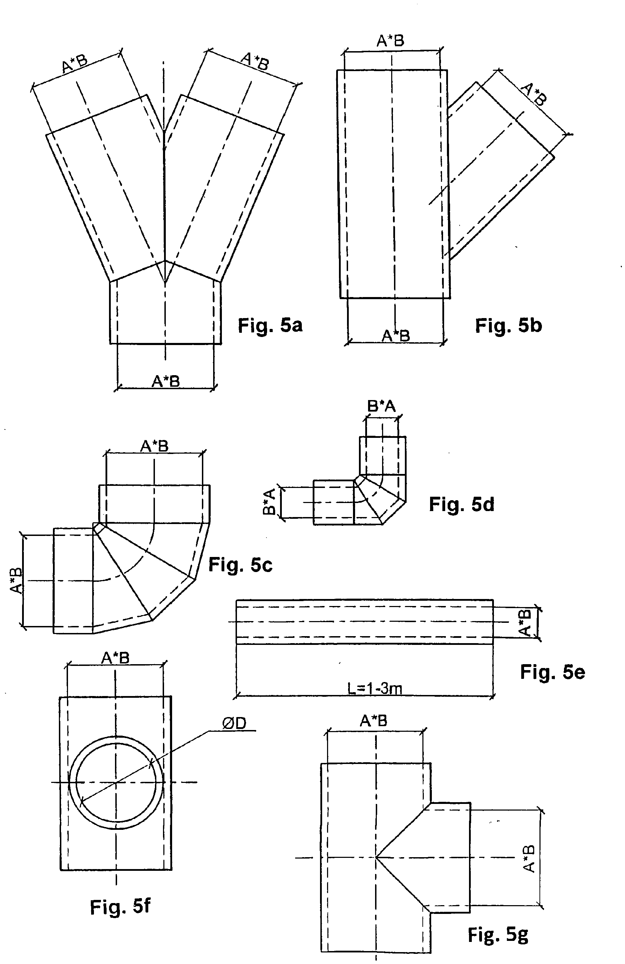

In Figures 4a-4d the exemplary embodiment of the invention can be seen in which the air handling duct element 4 has a rectangular cross section, whereas in Figs 5a-5f the fitting pieces 5 suitable for this construction are illustrated.

In Figures 4a-4d, the reference numbers used correspond to those used in Figs 1a-1d. Figure 5a shows a double-branched Y-fitting piece, in Fig. 5b a simple-branched Y-fitting piece, in Fig. 5c a 90°-fitting piece in horizontal position, in Fig. 5d a 90°-fitting piece in standing position, in Fig. 5e a straight tube fitting piece, in Fig. 5f a grid fitting piece, and in Fig. 5g a horizontal T-fitting piece can be seen. This embodiment is mainly used for ventilation of the so-called passive houses. The ventilating tubes of passive houses are built into the ceiling. With these duct elements 4, an identical surface with the surface of the pipelines of circular cross section can be realized, with the difference that the place requirement of a pipeline of rectangular cross section is smaller, thus the thickness of the concrete can be reduced.

From the above it can be seen that the solution according to the invention is simple, reliable and of small cost.

## Claims

1. Duct element (4) for air handling pipeline comprising several strips wound in individual layers, where the layers are wound with an overlapping area (Z) and of a given pitch (X), and the duct element is developed preferably for application as an pipeline in air handling systems, **characterized in that** the duct element (4) comprises at least three layers (1,2,3) from which the lowermost layer (1) and the uppermost covering layer (3) consist of closed-cell, hard, fire-retardant insulating polyolefin material having a density of at least of 90 kg/m³, whereas the layer (2) in the middle consists of a closed cell, soft, fire-retardant polyolefin material having a density of about 30-40 kg/m³, and the individual layers (1,2,3) are preferably laminated by using hot air.

2. The air handling duct element according to claim 1 **characterized in that** the lowermost layer (1) is an acoustic insulating multilayer construction containing first a layer (1a) of open-cell polyurethane material, a second layer (1b) of heavy plate e.g. of lead or rubber, and a third layer (1c) of closed-cell, hard, fire-retarding polyolefin material having a density of at least 90 kg/m³ (1c).

3. The air handling duct element according to claims 1 and 2 **characterized in that** both ends of the strips are cut down in 45°.

4. The air handling pipeline according to any of claims 1-3 **characterized in that** the uppermost covering layer (3) is provided with a textile, paint or aluminium foil for retarding fire.

5. The air handling duct element according to any of claims 1-4 **characterized in that** the pipeline (4) has a circular, rectangular or basket curve cross section.

6. The air handling duct element according to any of claims 1-5 **characterized in that** the innermost layer (1) being in contact with the flowing medium is treated with a bactericide and antistatic material.

7. Fitting piece for duct element according to any of the claims 1-6 **characterized in that** the fitting pieces (5) needed for fitting the duct elements (4) of pipeline together are also made of the duct elements (4).
